# EUROPEAN PATENT SPECIFICATION

(11) **EP 4 025 866 B1**
(45) Date of publication and mention of the grant of the patent: **22.05.2024**
(21) Application number: 20760511.4
(22) Date of filing: 13.08.2020
(51) Int. Cl.: F42B 15/00, B64C 39/02, G05D 1/00

(54) **IMPROVEMENTS IN AND RELATING TO A GUIDED WEAPON**
VERBESSERUNGEN AN UND IM ZUSAMMENHANG MIT EINER GEFÜHRTEN WAFFE
PERFECTIONNEMENTS APPORTÉS ET SE RAPPORTANT À UNE ARME GUIDÉE

(30) Priority: 05.09.2019 GB 201912776
(43) Date of publication of application: 13.07.2022
(73) Proprietor: BAE SYSTEMS plc, London SW1Y 5AD (GB)
(72) Inventor: WORRALL, Benjamin, Daniel, Usk, Monmouthshire NP15 1XL (GB); WRIGHT, Julian, David, Warton, Preston Lancashire PR4 1AX (GB); HUCKER, Martyn John, Usk, Monmouthshire NP15 1XL (GB)
(74) Representative: BAE SYSTEMS plc Group IP Department
(86) International application number: PCT/GB2020/051926
(87) International publication number: WO 2021/044114

(56) References cited:
- EP-A1- 3 489 138
- US-A1- 2006 255 205
- US-A1- 2019 107 374
- US-A1- 2019 107 374

## Description

The present invention relates to a rotary wing Unmanned Aerial Vehicle (UAV).

Guided weapons are available in a range of configurations. Typical missile systems, for instance, may be launched from land, sea or air-based platforms and may be pre-programmed with a target location pre-launch, or may be guided in real time via some form of communication link.

Some prior art missiles are able to perform a manoeuvre just prior to the final stage of engagement so that the correct orientation is achieved. The correct orientation is required or desirable so that there is maximum chance of the target being destroyed or maximally damaged.

Many missiles use shaped charges which are designed and arranged to have maximal effect in a particular direction. To penetrate a target's armour, it is typically preferable to have the shaped charge couple at right angles to the target. In this way, maximum energy from the shaped charge is transferred. If the angle differs greatly from truly perpendicular, then there is a consequential reduction in energy transfer, reducing the efficacy of the missile.

Recently, a new class of guided weapon has appeared, based on the use of an Unmanned Aerial Vehicle (UAV). UAVs are sometimes referred to as drones and often take the form of a rotary wing aircraft, comprising multiple rotors. They are often remote-controlled. They are popular with hobbyists and are often used for aerial photography, for instance. However, there is a growing use of such devices in commercial applications and, increasingly, military operations.

Their use in aerial reconnaissance is well-know, but their use in weapon deployment is relatively recent and poses certain problems.

A problem with such devices occurs at or just prior to final engagement with the target. A UAV typically attains a higher forward velocity by tilting its axis so that the rotors are not parallel with the ground. This tilted attitude delivers a greater forward velocity. However, such an attitude can hinder maximal engagement with the target. For clarity, attitude is herein the angle of the UAV relative to a horizontal surface, such that a UAV in level flight would have an attitude of zero degrees.

US2019/107374 is directed to vertically orientated UAVs comprising a camera and payload. US2006/255205 is directed to a winged UAV comprising a camera and a payload.

Embodiments of the present invention aim to address issues in the prior art, whether mentioned herein or not.

According to the present invention, there is provided a rotary wing Unmanned Aerial Vehicle, UAV, as claimed in claim 1. Other features of the invention will be apparent from the dependent claims, and the description which follows.

In an embodiment, the elongate body has a central longitudinal axis and the camera is located substantially on the axis forward, in use, of the explosive payload.

The plurality of rotors are arranged in a pair of matching sets, such that the matching sets extend from opposed sides of the body.

In an embodiment, the camera is provided with a gimbal mount, such that the camera orientation is independent from the orientation of the UAV.

In an embodiment, the gimbal mount is arranged such that the camera automatically adopts a forward-facing orientation.

In an embodiment, the automatic camera orientation may be over-ridden.

In an embodiment, the explosive payload is arranged to be movable within the body of the UAV such that a direction of explosive force is adjustable by the movement of the payload.

In an embodiment, the UAV is arranged to be remotely controlled and/or operable to travel autonomously to a predefined location.

In an embodiment, the explosive payload comprises Insensitive Munitions.

In an embodiment, the explosive payload is a shaped charge comprising one or more of: copper, tungsten, High Density Reactive Materials (HDRM) or alloys thereof.

In an embodiment, the UAV is arranged, in use, to perform a final approach manoeuvre so as to provide an optimal engagement angle with a target.

In an embodiment, in the final approach manoeuvre, a direction of the camera, a direction of the UAV and a direction of an explosion produced by the explosive payload are aligned.

For a better understanding of the invention, and to show how embodiments of the same may be carried into effect, reference will now be made, by way of example, to the accompanying diagrammatic drawings in which:
Figures 1a and 1b show an embodiment of the present invention engaging a target at a high speed;
Figures 2a and 2b show an embodiment of the present invention engaging a target at a medium speed;
Figures 3a and 3b show an embodiment of the present invention engaging a target at a low speed;
Figures 4a and 4b show side and plan views of an embodiment of the present invention; and
Figure 5 shows a side view of a further embodiment of the present invention, no longer forms part of the invention.

The inventive UAV is arranged such that a guidance camera/imaging device and an explosive payload are arranged substantially in-line and aligned to an elongate body of the UAV, along its longitudinal axis. In this sense, such a UAV is generally elongate and resembles a tube. The rotors are typically provided outside the elongate body and alongside it. This distinction renders such a UAV different in use to a known UAV in which an explosive payload is suspended below the UAV in the same manner as a helicopter might transport a load suspended from it.

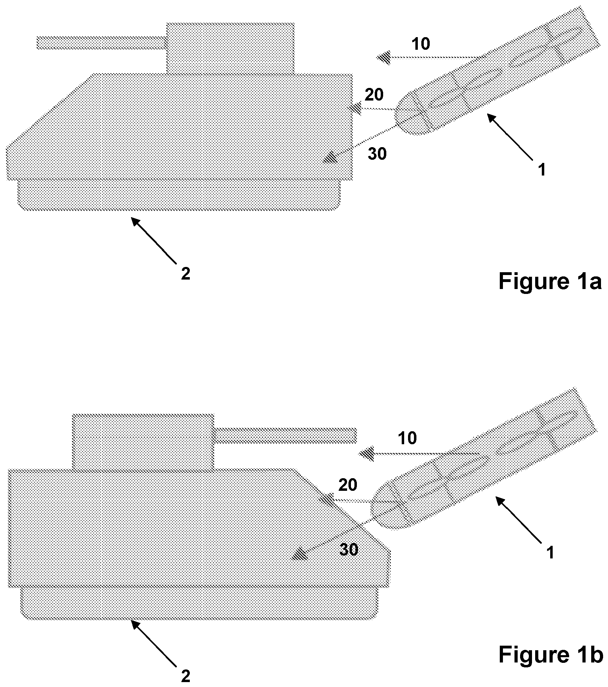

Figure 1a shows such a UAV 1 approaching a target 2. The target in this case is a tank or other armoured vehicle. As can be seen, the UAV 1 is proximal to a rear of the vehicle 2. The rear of the vehicle comprises a substantially upright surface (i.e. it is substantially perpendicular to the surface on the which the vehicle sits).

Figure 1a shows the UAV 1 approaching at a relatively high speed. This can be discerned by the angle of attitude of the UAV. As mentioned previously, a higher forward velocity may only be achieved by adjusting the attitude as shown.

Figure 1b shows the UAV 1 approaching at the same speed as shown in Figure 1a, but this time the UAV1 is approaching a front portion of the vehicle 2. The front portion in this scenario is angled at approximately 45° to the horizontal surface on which the vehicle 2 stands.

In this and the following examples, the rear of the vehicle is illustrated as a vertical surface and the front surface as an angled surface, but these are intended to illustrate the operation of the UAV in connection with differently angled surfaces and are not intended to be limiting or apply to a particular vehicle or other target.

Figure 1a shows three different arrows as directional indicators 10, 20, 30. Arrow 10 denotes the direction of flight of the UAV 1. Arrow 20 denotes the direction in which an internal guidance camera is pointed. Arrow 30 denotes the orientation of a shaped charge included in the UAV 1 as an explosive effector.

In the situation shown in Figure 1, it can be seen that the UAV 1 is approaching the target 2 in a direction substantially parallel to the ground (Arrow 10). The camera in this embodiment is arranged to point in the same direction as the UAV flight, but in other embodiments, the camera may be fixed such that is points in the same direction as arrow 30. At or near impact, the shaped charge included in the UAV is activated and the explosive force created is transferred to the target. For maximum transference, the arrow 30 should be substantially perpendicular to the surface of the target. In the scenario shown in Figure 1a, it can be seen that the arrow 30 is far from perpendicular and so the transference of explosive energy is not optimised.

In Figure 1b, however, the arrow 30 is substantially perpendicular to the angled surface of the target 2 and so transference of explosive energy is maximised or at least increased when compared to the situation in Figure 1a.

From Figures 1a and 1b, therefore, it is possible to understand that the angle of the UAV 1 relative to the target 2 is important in ensuring maximal transfer of explosive energy and that the angle is determined, at least in part, by the speed of the UAV.

The speed of the UAV may be determined by several factors, such as the desire to approach the target at speed so as to minimise the time available for the target to e.g. take evasive action or deploy countermeasures. Such a situation would suggest a fast approach would be beneficial. However, such an approach may be noisier and so easier to detect. There may also be problems controlling the UAV 1 remotely at higher speeds.

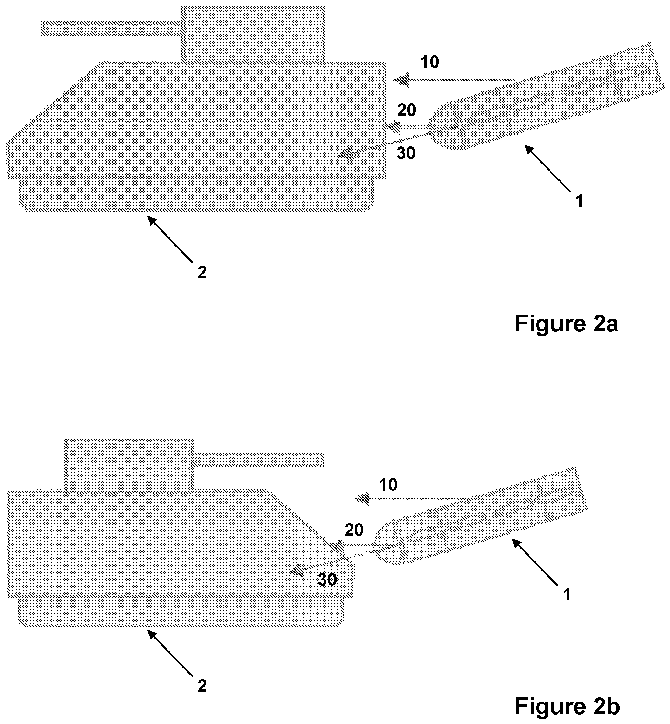

As such, there are situations where the UAV may approach the target at a lower speed. Figures 2a and 2b show the UAV 1 approaching, respectively, the rear and front of the target, as in Figures 1a and 1b, but at a lower forward speed. The speed here, for ease of reference will be termed a medium speed. The arrows 10, 20 and 30 denote the same parameters as before.

In Figure 2a, the angle of the UAV 1 relative to the target is different to that shown in Figure 1a, commensurate with the relatively lower velocity depicted here. As a result, the arrow 30 is not substantially perpendicular to the rear surface of the target 2, resulting in a non-optimal transfer of explosive energy.

Similarly, in Figure 2b, the arrow 30 is not substantially perpendicular to the front surface, resulting in a non-optimal transfer of explosive energy.

However, by comparison with Figures 1a and 1b, the scenario illustrated in Figures 2a and 2b reveal that, all other factors being equal, the medium speed of approach illustrated will result in a more effective transfer of energy if the rear of the vehicle 2 is targeted, but a less effective transfer of energy if the front of the vehicle 2 is targeted.

This difference in outcome illustrates well that the angle of engagement, dictated by the sped of approach is important when determining the effectiveness of the attack.

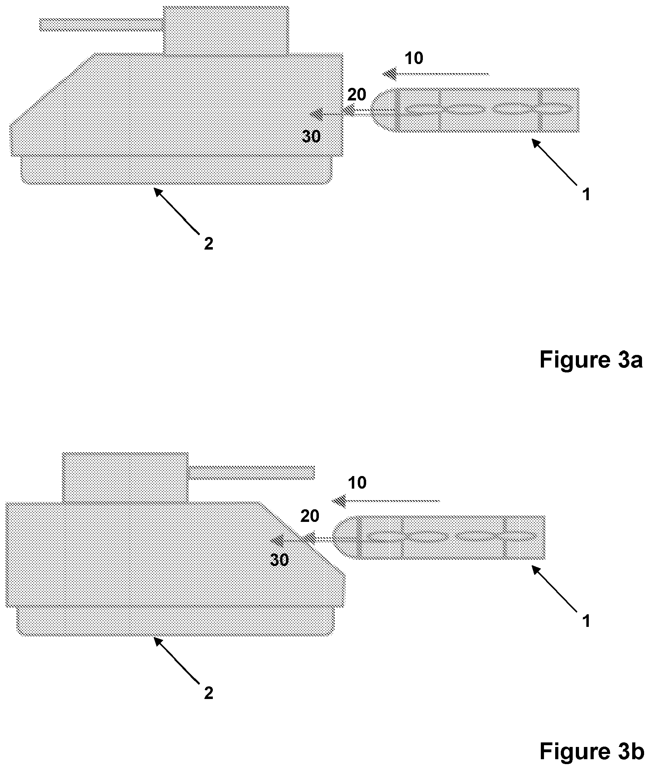

In a still further illustration of the differences which may be experienced depending upon speed of approach, Figures 3a and 3b illustrate a scenario where the UAV 1 approaches the target 2 at a relatively much lower speed. The UAV may even be in a hovering configuration (i.e. not moving relative to the target 2). The speed here, for ease of reference will be termed a low speed.

In Figure 3a, the UAV 1 approaches the target 2 in such a manner that it travels (as shown by arrow 10) in a direction substantially parallel to the ground. The camera (as shown by arrow 20) faces in the same direction and the orientation of the shaped charge (as shown by arrow 30) is also directed in the same direction.

As such, this form of approach maximises explosive energy transference to the rear of the vehicle 2.

However, in Figure 3b, if the UAV 1 approaches the front of the vehicle 2, then the energy transferred from the shaped charge will not be optimised and such an attack is less likely to be effective.

By comparing the scenarios illustrated in the aforementioned figures, it can be seen that the speed of approach of the UAV is a key determiner of the chances of the attack being successful. If the rear of the vehicle is targeted, then a low speed attack is the most successful, followed by a medium speed and then a high speed attack.

However, if the front of the vehicle is targeted, then a full speed attack is the most successful, followed by a medium speed attack and then a low speed attack.

From the foregoing, it can be seen that a problem with such a UAV is that control of the UAV speed, such that angle of engagement can be controlled is a key determiner of the success of the attack. There may be conflicting requirements in the control of the UAV (e.g. ease of control, noise) which have an influence in the choice of speed and these can adversely affect the outcome.

Embodiments of the present invention address and mitigate these issues as described in the following.

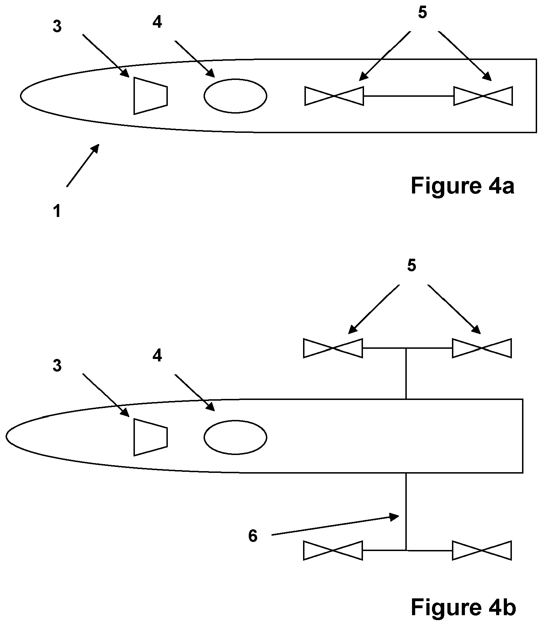

Figures 4a and 4b show side and plan views, respectively of a UAV 1 according to an embodiment of the invention.

As can be seen, the UAV 1 comprises a substantially tubular and elongate body portion. Extending laterally from the body are a number of rotors 5 on a support structure 6. The number of rotors 5 and the nature of the support structure 6 may be configured as required so as to meet various performance requirements. The configuration shown in Figures 4a and 4b are therefore exemplary only and are not intended to be limiting.

Within the body of the UAV, alongside a power source, communication and control circuitry (not shown) is a camera 3 and explosive effector 4.

The camera 3 is positioned such that it can provide, via a suitable communication link, an image showing a view from the UAV 1 in flight.

The camera 3 relays imagery back to an operator, showing a view from the UAV of the immediate environment. This is a substantially forward-facing view, but in certain embodiments, this can be adjusted as required.

The UAV 1 is typically remote controlled by a remote operator who steers the UAV 1 using the images from the camera 3 to reach the target. Alternatively, the UAV 1 may be programmed with location coordinates which enable the UAV 1 to autonomously reach its destination. In this case, the images from the camera 3 may provide visual confirmation that the mission is proceeding well.

A combination of these two approaches may be used, where remote piloting is performed for some of the journey and autonomous operation is used for the rest.

If the camera 3 is fixed in its orientation, then this can pose problems if the UAV 1 is required to tilt in flight (as shown in Figure 1a, for instance) in order to fly at a required speed. In such a case, the images from the camera 3 do not show a particularly useful view to a remote operator, since the camera is effectively pointed down towards the ground. See, for instance arrow 30 in Figure 1a. This may be acceptable in some circumstances, and may be useful in the final stages of target engagements, but is likely to be sub-optimal for the majority of the flight.

As such, in an embodiment of the invention, the camera 3 is arranged within a gimbal mount, such that the camera 3 remains pointing in a forward facing direction, whatever the attitude of the UAV 1. In the figures 1a - 3b, the camera direction, indicated by arrow 20, assumes the use of a gimbal mount, since the arrow 20 is always parallel with the arrow 10 which depicts the forward motion of the UAV 1.

Such an arrangement allows a remote operator to achieve a useful "pilot's eye view" of the UAV flight trajectory.

The orientation of the camera within the gimbal mount may be adjusted to deliberately deviate from such a forward facing orientation. For instance, if the UAV 1 approaches a target from a great height and then dives towards the target, then the camera direction may need adjusting to deliberately point downwards so that the target is visible, rather that a forward facing viewpoint. This may be achieved via direct operator control or it may be initiated automatically once the target is within a defined distance.

The camera 3 may operate at the wavelength of visible light and/or may operate as a thermal imaging sensor to assist night-time missions.

The explosive effector 4 is an explosive device which may be controlled remotely so as to damage or destroy a suitable target. The explosive effector is preferably a shaped charge, which is particularly suitable for penetrating vehicle armour and is highly directional in use. Typically, as shown in Figures 1a-3b, the orientation of the shaped charge is such that the explosive force is generated in the direction of the arrow 30 i.e. along the longitudinal axis of the UAV 1.

However, the shaped charge may be configured such that is relatively movable within the UAV body so that the explosive energy can be directed according to the relative position of the shaped charge. The position may be continuously variable within a defined range or one of several discrete positions may be selected.

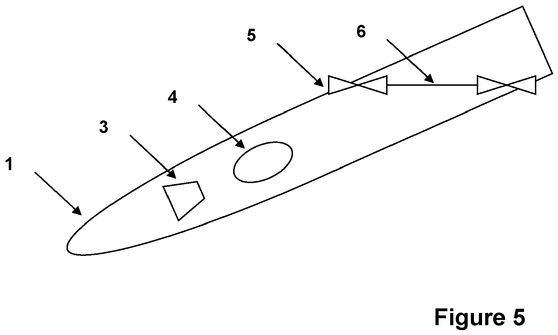

A further crucial factor in the configuration of the UAV 1 is the orientation of the rotors 5 and their support structure 6. As shown in Figure 4a and 4b, the rotors are located such that the two opposed pair of rotors lie on a plane substantially parallel with the longitudinal axis of the UAV 1. However, in an embodiment, which no longer forms part of the invention, this plane can be rotated as shown in Figure 5. In this way the camera may not require a gimbal mount, since the attitude of the UAV may be adjusted by means of adjusting the rotor plane. It is noted that the embodiment shown utilises two opposed pairs of rotors.

In the foregoing, details of three different adjustable parameters are disclosed: camera orientation; shaped charge orientation and rotor plane angle. In embodiments of the invention, one or more of these parameters may be adjusted in order to achieve a particular aim.

In an embodiment, the UAV 1 is provided with a proximity detector (not shown). Once armed, the effector 4 is triggered to explode once the UAV is within a predetermined distance, as sensed by the proximity detector. The predetermined distance may be set as required and may depend on factors such as the approach velocity of the UAV. It is typically in the range of 50-1 00cm.

In a further embodiment, the proximity detector is further arranged to sense a surface geometry of the target. As indicated in Figures 1a-3b, the angle of engagement of the UAV can determine the effectiveness of the effector 4. As such, in response to sensing the surface geometry of the target, the UAV 1 can perform a final approach manoeuvre which orientates the UAV in such a way that the explosive energy is directed so as to maximise the effectiveness of the effector. This is typically such that the explosive force is arranged to be perpendicular to the target surface.

In an embodiment where the UAV is being remotely controlled, the operator may be provided with visual or other feedback to indicate the optimum approach to adopt to the target.

The final approach manoeuvre may require a change in speed and/or a change in rotor 5 plane orientation (if the UAV has this facility). A faster approach will tilt the longitudinal axis of the UAV and is useful for angled surfaces, whereas a slower approach is useful for vertical surfaces.

Such a manoeuvre may be initiated automatically once the operator confirms that the target is correct. The UAV 1 approaches at whatever velocity is selected, regardless of whether this velocity corresponds to the correct angle of engagement, and the UAC orientates itself to assume an optimal angle of engagement.

In the final approach manoeuvre, a direction of the camera, a direction of the UAV and a direction of an explosion produced by the explosive payload are aligned. In this way, the UAV is approaching the target directly, so the camera can see exactly where the UAV will strike, which corresponds to the direction of the explosive force.

In an embodiment, the effector may not be a shaped charge but may, instead, be a blast charge i.e. a non-directional explosive force. Such an effector may be preferred in some situations. Further, such an effector may comprise a fragmentation casing.

The type of explosive used in the effector depends on the specific use, but typically Insensitive Munitions (IM) are used.

In the case that the effector uses a shape charge, then the use of one or more of the following materials as a liner material is preferred: copper, tungsten, High Density Reactive Materials (HDRM) or alloys thereof.

A variety of UAVs 1 may be provided, each equipped with one or more different effectors. Indeed, a single UAV may be provided with a plurality of effectors, one or more of which may be selected by an operator, as required.

## Claims

1. A rotary wing Unmanned Aerial Vehicle, UAV (1), comprising a plurality of rotors (5), a camera (3) and an explosive payload (4), wherein the UAV (1) comprises a generally elongate body, and the camera and the payload are arranged substantially in-line within the body, wherein extending laterally from the body are the plurality of rotors on a support structure (6), wherein the plurality of rotors are arranged in a pair of matching sets, such that the matching sets extend from opposed sides of the body said rotors are located such that the two opposed pair of rotors lie on a plane substantially parallel with the longitudinal axis of the UAV.

2. The UAV of claim 1 wherein the elongate body has a central longitudinal axis and the camera (3) is located substantially on the axis forward, in use, of the explosive payload (4).

3. The UAV of any preceding claim wherein the camera (3) is provided with a gimbal mount, such that the camera orientation is independent from the orientation of the UAV 1.

4. The UAV of claim 3 wherein the gimbal mount is arranged such that the camera (3) automatically adopts a forward-facing orientation.

5. The UAV of claim 4 wherein the automatic camera orientation may be over-ridden.

6. The UAV of any preceding claim wherein the explosive payload (4) is arranged to be movable within the body of the UAV (1) such that a direction of explosive force is adjustable by the movement of the payload (4).

7. The UAV of any preceding claim wherein the UAV (1) is arranged to be remotely controlled and/or operable to travel autonomously to a predefined location.

8. The UAV of any preceding claim wherein the explosive payload (4) comprises Insensitive Munitions.

9. The UAV of any preceding claim wherein the explosive payload (4) is a shaped charge comprising a liner material of one or more of: copper, tungsten, High Density Reactive Materials (HDRM) or alloys thereof.

## Patentansprüche

1. Unbemanntes Drehflügel-Luftfahrzeug (UAV) (1), umfassend eine Vielzahl von Rotoren (5), eine Kamera (3) und eine explosive Nutzlast (4), wobei das UAV (1) einen im Allgemeinen länglichen Körper umfasst und die Kamera und die Nutzlast im Wesentlichen in einer Linie innerhalb des Körpers angeordnet sind, wobei sich die Vielzahl von Rotoren in einer seitlichen Erstreckung von dem Körper auf einer Trägerstruktur (6) befinden, wobei die Vielzahl von Rotoren in einem Paar passender Sätze angeordnet sind, derart, dass sich die passenden Sätze von gegenüberliegenden Seiten des Körpers erstrecken, wobei die Rotoren derart positioniert sind, dass die zwei gegenüberliegenden Paare von Rotoren auf einer Ebene liegen, die im Wesentlichen parallel zu der Längsachse des UAV ist.

2. UAV nach Anspruch 1, wobei der längliche Körper eine mittlere Längsachse aufweist und die Kamera (3) im Wesentlichen auf der Achse nach vorne, im Gebrauch, von der explosiven Nutzlast (4) positioniert ist.

3. UAV nach einem der vorstehenden Ansprüche, wobei die Kamera (3) mit einer kardanischen Aufhängung versehen ist, derart, dass die Kameraausrichtung unabhängig von der Ausrichtung des UAV 1 ist.

4. UAV nach Anspruch 3, wobei die kardanische Aufhängung derart angeordnet ist, dass die Kamera (3) automatisch eine nach vorne gerichtete Ausrichtung einnimmt.

5. UAV nach Anspruch 4, wobei die automatische Kameraausrichtung überschrieben werden kann.

6. UAV nach einem der vorstehenden Ansprüche, wobei die explosive Nutzlast (4) so angeordnet ist, dass sie innerhalb des Körpers des UAV (1) beweglich ist, derart, dass eine Richtung der explosiven Kraft durch die Bewegung der Nutzlast (4) anpassbar ist.

7. UAV nach einem der vorstehenden Ansprüche, wobei das UAV (1) so angeordnet ist, dass es ferngesteuert und/oder betreibbar ist, um sich autonom zu einer vordefinierten Position zu bewegen.

8. UAV nach einem der vorstehenden Ansprüche, wobei die explosive Nutzlast (4) unempfindliche Munition umfasst.

9. UAV nach einem der vorstehenden Ansprüche, wobei die explosive Nutzlast (4) eine geformte Ladung ist, umfassend ein Auskleidungsmaterial eines oder mehrere der Folgenden: Kupfer, Wolfram, High Density Reactive Materials (HDRM) oder Legierungen davon.

## Revendications

1. Véhicule aérien sans pilote à voilure tournante, UAV (1), comprenant une pluralité de rotors (5), une caméra (3) et une charge utile explosive (4), dans lequel l'UAV (1) comprend un corps généralement allongé, et la caméra et la charge utile sont agencées sensiblement en ligne à l'intérieur du corps, dans lequel la pluralité de rotors sur une structure de support (6) s'étendent latéralement à partir du corps, dans lequel la pluralité de rotors sont agencés dans une paire d'ensembles concordants, de telle sorte que les ensembles concordants s'étendent à partir de côtés opposés du corps lesdits rotors sont situés de telle sorte que les deux paires opposées de rotors se trouvent sur un plan sensiblement parallèle à l'axe longitudinal de l'UAV.

2. UAV selon la revendication 1, dans lequel le corps allongé a un axe longitudinal central et la caméra (3) est située sensiblement sur l'axe vers l'avant, en cours d'utilisation, de la charge utile explosive (4).

3. UAV selon une quelconque revendication précédente, dans lequel la caméra (3) est pourvue d'une monture à cardan, de telle sorte que l'orientation de la caméra est indépendante de l'orientation de l'UAV 1.

4. UAV selon la revendication 3, dans lequel la monture à cardan est agencée de telle sorte que la caméra (3) adopte automatiquement une orientation faisant face vers l'avant.

5. UAV selon la revendication 4, dans lequel l'orientation automatique de la caméra peut être outrepassée.

6. UAV selon une quelconque revendication précédente, dans lequel la charge utile explosive (4) est agencée pour être mobile à l'intérieur du corps de l'UAV (1) de telle sorte qu'une direction de force explosive est réglable par le mouvement de la charge utile (4).

7. UAV selon une quelconque revendication précédente, dans lequel l'UAV (1) est agencé pour être commandé et/ou exploitable à distance pour se déplacer de manière autonome vers un emplacement prédéfini.

8. UAV selon une quelconque revendication précédente, dans lequel la charge utile explosive (4) comprend des munitions insensibles.

9. UAV selon une quelconque revendication précédente, dans lequel la charge utile explosive (4) est une charge façonnée comprenant un matériau de revêtement d'un ou plusieurs éléments parmi : le cuivre, le tungstène, les matériaux réactifs à haute densité (HDRM) ou leurs alliages.
